# EUROPÄISCHE PATENTSCHRIFT

(11) **EP 0 801 880 B1**
(45) Veröffentlichungstag und Bekanntmachung des Hinweises auf die Patenterteilung: **22.12.1999**
(21) Anmeldenummer: 96914103.5
(22) Anmeldetag: 23.04.1996
(51) Int. Cl.: H05B 37/02

(54) **DÄMMERUNGSSCHALTER**
DUSK-TO-DAWN SWITCH
INTERRUPTEUR CREPUSCULAIRE

(30) Priorität: 24.04.1995 DE 19514972
(43) Veröffentlichungstag der Anmeldung: 22.10.1997
(73) Patentinhaber: Steinel GmbH & Co. KG, 33442 Herzebrock-Clarholz (DE)
(72) Erfinder: STEINEL, Heinrich, Wolfgang, D-33442 Herzebrock-Clarholz (DE)
(74) Vertreter: Behrmann, Niels, Dipl.-Ing.
(86) Internationale Anmeldenummer: EP9601692
(87) Internationale Veröffentlichungsnummer: WO9634515

(56) Entgegenhaltungen:
- EP-A- 0 563 696
- US-A- 4 281 365
- US-A- 5 182 502

## Beschreibung

Die Erfindung betrifft einen Dämmerungsschalter nach dem Oberbegriff des Patentanspruches 1.

Aus dem Stand der Technik sind eine Leuchtstofflampe aufweisende Leuchten bekannt, die ein Photoelement zum Erfassen der Umgebungshelligkeit besitzen. In Abhängigkeit von der so erfaßten Umgebungshelligkeit kann dann die Leuchtstofflampe auf geeignete Weise automatisch ein- bzw. ausgeschaltet werden. Eine derartige gattungsbildende Vorrichtung ist beispielsweise aus der DE 43 11 804 A1 bekannt.

Allerdings stellt sich bei der automatischen Steuerung einer solchen Leuchte in Abhängigkeit vom Umgebungslicht das Problem, daß das von der Lampe selbst erzeugte Eigenlicht auch auf das Erfassungselement für das Umgebungslicht fallen kann, und auf diese Weise -- quasi im Wege einer optischen Rückkopplung -- das Meßergebnis nicht nur stark verfälschen, ein Ausschalten bei zunehmendem Umgebungslicht möglicherweise gar nicht mehr erfolgen kann.

Bei der beschriebenen Leuchte aus dem Stand der Technik wird dieses Problem offensichtlich in einfacher Weise dadurch bewältigt, daß das Eigenlicht aus dem optischen Strahlengang der Lichterfassung ausgeblendet wird, d. h. mit Hilfe einer Blende verhindert wird, daß Eigenlicht der Leuchtstofflampe auf das Photoelement fällt.

Solange eine derartige Leuchte im Außenbereich eingesetzt wird, führt diese Lösung zu befriedigenden Ergebnissen und verhindert in der Regel eine störende Beeinflussung durch das Eigenlicht. Bereits aber bei Einsatz in der Nähe eines reflektierenden Körpers kann nicht mehr sichergestellt werden, daß Eigenlicht nicht mittels einer Reflektion auf das Photoelement gerät und dadurch die Schaltfunktion durchgreifend beeinträchtigt.

Aus der EP 0 563 696 ist eine Schaltanordnung zum Ein- und Ausschalten künstlicher Lichtquellen, insbesondere in Abhängigkeit von der umgebenen Beleuchtungsstärke nach dem Oberbegriff des Patentanspruches 1 bekannt, wobei hier die Beleuchtungsstärke mit einem (nicht näher spezifizierten) Lichtsensor gemessen wird, dessen spektrale Lichtempfindlichkeit an die spektrale Lichtempfindlichkeit des menschlichen Auges angepasst ist.

Insbesondere im praktischen Betrieb mit Leuchtstoffröhren, die in der Anlauf- bzw. Einschwingphase breitbandige Lichtstrahlung emittieren, besteht hier jedoch die nachteilige Wirkung störenden Flackerns des Leuchtmittels während dieser Einschwingphase, hervorgerufen durch das empfangene Eigenlicht. Dieses Flackern wirkt sich darüber hinaus nachteilig auf die Lebensdauer des verwendeten Leuchtmittels aus.

Aufgabe der vorliegenden Erfindung ist es daher, einen Dämmerungsschalter für eine Leuchte nach dem Oberbegriff des Patentanspruchs 1 zu schaffen, der diesen Nachteil aus dem Stand der Technik beseitigt, und der inbesondere unbeeinflußt von durch die Leuchte emittierten Lichts einen ordnungsgemäßen Schaltungsbetrieb gewährleistet.

Die Aufgabe wird durch den Dämmerungsschalter nach dem Patentanspruch 1 gelöst. Vorteilhafte Weiterbildungen der Erfindung sind in den Unteransprüchen beschrieben.

Vorteilhaft bewirkt dabei das aktive Verschieben der Ansprechschwelle für die Aktivierung bzw. Deaktivierung -- wobei unter diesen Begriffen nicht nur das Ein- bzw. das Ausschalten, sondern auch das stufenweise oder stufenlose Verändern der Beleuchtungsleistung des Leuchtmittels zu verstehen ist -- in Abhängigkeit von der erfaßten Lichtmenge, daß nicht, wie bei statischen Schwellen, eine von den (Eigen-) Lichtbedingungen unabhängige Bewertung erfolgt, sondern vielmehr erfolgt die Schwellenverschiebung unmittelbar in Abhängigkeit von dem auf das Lichterfassungselement einfallenden Licht. Mit anderen Worten, es wird konkret der Betrag des Eigenlichts durch das Lichterfassungselement gemessen, wobei auf diese Weise auch besonderen Reflektionsbedingungen oder betriebsdauerabhängigen Alterungserscheinungen des Eigenlichtes Rechnung getragen werden kann: Gemäß der vorliegenden Erfindung bleiben derartige Effekte ohne Einfluß auf das Betriebsverhalten des Dämmerungsschalters.

So wird mittels der Hysterese-Einrichtung ein Paar von Schwellen festgelegt, um ein Flackern od.dgl. des Lichts bei kurzfristigen Schwankungen auszuschließen; darüber hinaus ist gemäß einer bevorzugten Weiterbildung der Abstand der Schwellen in der Hysterese selbst variabel, wobei eine solche Schwellwertfestlegung dann vorteilhaft mittels tabellenartig vorgegebener Speicherwerte erfolgen kann. Auf diese Weise ist es dann möglich, die Höhe der Hysterese jeweiligen Umgebungslichtbedingungen anzupassen, so daß das Betriebsverhalten des erfindungsgemäßen Dammerungsschalters weiter verbessert wird. Dabei ist es von der Erfindung auch umfaßt, ein Unter- oder Überschreiten einer jeweiligen Schwelle durch einen Helligkeitswert als Trigger für einen nachfolgenden Schalt- oder Steuervorgang zu benutzen - entweder zum digitalen Ein- und Ausschalten des Leuchtmittels, oder zum stufenweisen oder stufenlosen Dimmen desselben.

Das weiterbildungsgemäße Erfassen des einfallenden Lichtes mittels der Meßeinrichtung über einen vorbestimmten Zeitraum und das Bilden von Mittelwerten verringert weiter die Empfindlichkeit des Dämmerungsschalters gegenüber kurzfristigen Lichtschwankungen.

Gemäß einer weiteren, vorteilhaften Weiterbildung ist darüber hinaus die das Schwellwertpaar erzeugende Hysterese, die erfindungsgemäß ausgehend von einem aktuellen Helligkeitswert gebildet wird, auch abhängig von vorhergehenden Schaltzuständen des Leuchtmittels: War beispielsweise die vorhergehende, abgeschlossene Einschaltdauer kürzer als ein vorgegebener Wert, würde daraufhin beim nächsten Einschaltzyklus die Hysterese entsprechend vergrößert, wobei dies -- bei i.w. gleichbleibenden Lichtverhältnissen -- eine längere Einschaltdauer zur Folge hätte; auch mit dieser Maßnahme kann automatisch und dynamisch das Einschalt- und Ausschaltverhalten der Lampe optimiert werden.

Gemäß einer weiteren, bevorzugten Ausführungsform der Erfindung wird als Lichterfassungselement ein LDR eingesetzt, dessen Lichterfassungsspektrum i.w. dem des menschlichen Auges entspricht, so daß auch ein physiologisch günstiges und natürliches Schaltverhalten erreicht wird. Zum Ausgleichen des i.w. logarithmischen Kennlinienverlaufes dieses Elementes wird dann bevorzugt eine mechanische Blendeneinstellung für eine manuelle Vorwahl der Schwelle benutzt, weil auf diese Weise der logarithmische Verlauf einfach und ohne erhöhte Schaltungskomplexität ausgeglichen werden kann. Alternativ ist eine solche Einstellung natürlich auch mittels eines entsprechenden elektronischen -- beispielsweise digitalen -- Ausgleichs möglich.

Gemäß einer bevorzugten Weiterbildung der Erfindung, für die auch unabhängig Schutz beansprucht wird, bewirkt das optische Ausfiltern des -- beispielsweise speziell von einer Leuchtstofflampe -- emittierten Eigenlichts, daß für die nachfolgende Signalverarbeitung nur aus dem Umgebungslicht stammende Spektralkomponenten Berücksichtigung finden, so daß auch auf diese Weise die Funktion des Dämmerungsschalters vom Eigenlicht unbeeinflußt ist. Vorteilhaft liegen dabei die ausgefilterten Spektralkomponenten unterhalb etwa 700 nm und oberhalb 1000 nm, wobei dies besonders für eine Leuchtstofflampe eine günstige, optische Eigenlichtkompensation bewirkt.

Eine solche optische Filtereinrichtung mit Bandpaßcharakteristik kann beispielsweise als Hintereinanderschaltung von zwei diskreten Filterelementen realisiert sein, oder aber das Gehäuse eines das Lichterfassungselement realisierenden elektronischen Photoelements selbst könnte geeignet -- z.B. durch Beschichten -- eine solche optische Filterwirkung bekommen.

Die gemäß der Erfindung vorgesehene Verzögerungseinrichtung bewirkt vorteilhaft, daß während der Anlauf- bzw. Anwärmphase z.B. einer Leuchtstofflampe in den ersten Betriebsminuten im für die Auswertung berücksichtigten Spektrum erscheinende Spektralimpulse die ordnungsgemäße Funktion des Dämmerungsschalters nicht beeinträchtigen.

Bevorzugt kann schließlich der erfindungsgemäße Dämmerungsschalter auch Bestandteil eines -- zusätzlich einen Bewegungsmelder oder andere Erfassungseinrichtungen aufweisenden -- Beleuchtungssystems sein, wobei insbesondere zur Anwendung in einer Büro- und/oder Gewerbeumgebung ein solcher Dämmerungsschalter abnehmbar befestigbar an verschiedenen Stellen eines Beleuchtungssystems eingerichtet sein kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: ein Wellenlängenspektrum einer üblichen Leuchtstofflampe zur Ansteuerung durch den Dämmerungsschalter gemäß der vorliegenden Erfindung;
- Fig. 2:: eine schematische, teilweise geschnittene Seitenansicht des Dämmerungsschalters im eingebauten Zustand in einer Leuchte gemäß einer bevorzugten Ausführungsform;
- Fig. 3:: einen Phototransistor zum Einsatz in dem Dämmerungsschalter sowie einen schematisch im Strahlengang davor angeordneten Kantenfilter;
- Fig. 4:: eine Schnittansicht des Kantenfilters;
- Fig. 5:: ein Diagramm mit der Dämpfungscharakteristik des Kantenfilters;
- Fig. 6:: ein Blockschaltbild mit den wesentlichen Funktionsbestandteilen des Dämmerungsschalters gemäß einer weiteren bevorzugten Ausführungsform;
- Fig. 7:: ein Blockschaltbild des Dämmerungsschalters gemäß einer weiteren vorteilhaften Weiterbildung der Erfindung;
- Fig. 8:: eine schematisierte Draufsicht auf eine mechanische Blende zur Regelung der Ansprechschwelle des Sensors gemäß einer Weiterbildung der Erfindung, die als beste Ausführungsform (best mode) zu verstehen ist;
- Fig. 9:: ein Ablaufdiagramm mit Verfahrensschritten bzw. Funktionseinheiten zum Verdeutlichen der Funktionsweise des erfindungsgemäßen Dämmerungsschalters gemäß einer weiteren vorteilhaften Weiterbildung der Erfindung;
- Fig. 10:: ein Blockschaltbild zur Verdeutlichung des Zusammenwirkens von Funktionsgruppen bei einer Verwendung des erfindungsgemäßen Dämmerungsschalters mit stufenweise dimmbarem Leuchtmittel;
- Fig. 11:: die schematische Darstellung von Signalverläufen und Schaltzeiten im Ablaufbetrieb des erfindungsgemäßen Dämmerungsschalters gemäß Fig. 9; und
- Fig. 12:: die schematische Darstellung von Signalverläufen und Schaltzeiten im Ablaufbetrieb des erfindungsgemäßen Dammerungsschalters gemäß Fig. 10.

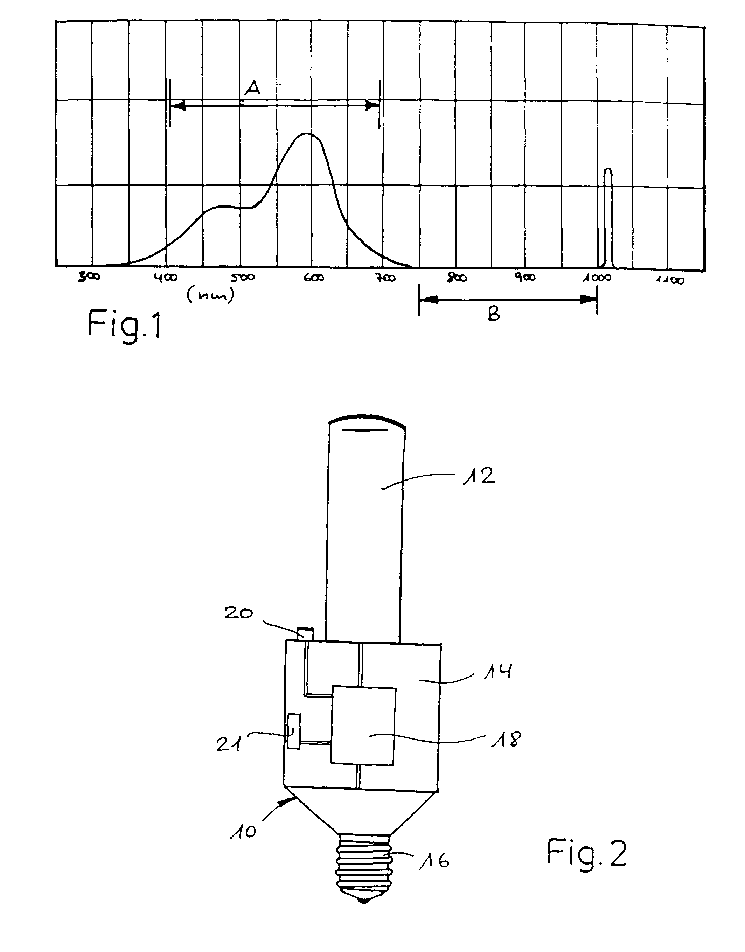

Das Diagramm in Fig. 1 zeigt ein typisches Wellenlängenspektrum einer handelsüblichen Leuchtstofflampe, die im wesentlichen weißes Licht ausstrahlt. Im Diagramm ist dafür entlang der Abszisse die Lichtwellenlänge (in nm) aufgetragen, und entlang der Ordinate die jeweils zugehörige Strahlungsleistung. Der durch den Pfeil A bezeichnete Wellenlängenbereich gibt in etwa den Bereich des für das menschliche Auge sichtbaren Lichts an.

Wie aus dem Diagramm gemäß Fig. 1 deutlich zu erkennen ist, liegt oberhalb des Bereiches sichtbaren Lichts im infraroten Bereich eine Wellenlängenspitze im Spektrum, deren relative Strahlungsleistung beträchtlich ist, und die -- bedingt durch den Quecksilberanteil in der Gasentladungsröhre -- bei 1014 nm liegt.

Wie die Erfinder herausgefunden haben, existiert zwischen dieser oberen Wellenlängenspitze und dem sichtbaren Lichtspektrum der Leuchtstofflampe ein Wellenlängenbereich (in der Fig. 1 durch B markiert), der -- im stabilisierten Betriebszustand der Leuchtstofflampe nach der Warmlaufphase -- im wesentlichen frei von Lichtemission ist.

Ein Merkmal des erfindungsgemäßen Dammerungsschalters ist es, diesen Wellenlangenbereich B, der in etwa zwischen 750 nm als Untergrenze und 1000 nm als Obergrenze liegt, für eine zuverlässige Messung des Umgebungslichts zu nutzen, da der Bereich B einerseits weitgehend unbeeinflußt vom durch die Leuchtstofflampe ausgestrahlten Lichtspektrum ist, andererseits aber, obwohl er bereits im infraroten Bereich jenseits des für das menschliche Auge sichtbaren Lichtspektrums liegt, hinreichend exakt einen für das Umgebungslicht repräsentativen Wert liefern kann. (Die relative Strahlungsstärke des Umgebungslichts in diesem Spektralbereich B ist im wesentlichen proportinal zum sichtbaren Umgebungslicht, insoweit also repräsentativ).

Fig. 2 zeigt in der schematischen, teilweise aufgeschnittenen Seitenansicht eine Leuchtstofflampe 10 mit einem Dämmerungsschalter gemäß einer bevorzugten Ausführungsform der vorliegenden Erfindung.

Eine von dem Dämmerungsschalter anzusteuernde Leuchtstoffröhre 12 ist schematisch auf ein Gehäuse 14 aufgesteckt gezeigt, wobei das Gehäuse 14 an dem dem Leuchtmittel 12 entgegengesetzten Ende einen Schraubsokkel 16 aufweist. Eine auf einer Schaltungsplatine 18 gebildete Dämmerungsschaltung ist im Gehäuse 14 gehalten, wird über den Sockel 16 mit Spannung versorgt und steuert die Leuchtstoffröhre 12. Ein nachfolgend näher erläutertes Kantenfilter aufweisender Lichtsensor 20 ist mit der Schaltung 18 verbunden. Im dargestellten Ausführungsbeispiel befindet sich der Lichtsensor 20 durch seine Anbringung auf der Gehäuseoberseite in direktem Lichtkontakt mit dem Leuchtmittel 12, so daß vom Leuchtmittel 12 emittiertes Licht direkt auf den Sensor 20 fallen kann.

Ergänzend ist die Schaltung 18 mit einem von außen durch das Gehäuse hindurch zugänglichen Stellelement 21 verbunden, welches in geeigneter Weise zum Einstellen einer Ansprechschwelle, Leuchtdauer, od. dgl. weiterer Parameter vorgesehen ist.

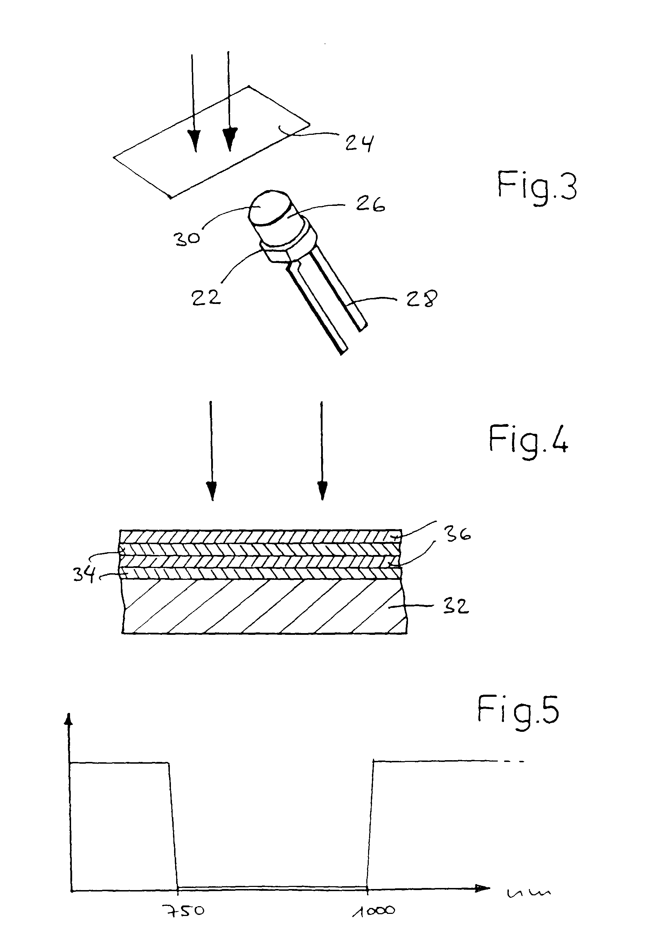

Fig. 3 zeigt in schematischer Darstellung einen Phototransistor 22 mit im Strahlengang darüber angeordnetem Kantenfilterplättchen 24. Der Phototransistor weist ein Gehäuse 26 sowie Anschlußbeine 28 auf, wobei das Gehäuse 26 an seinem für den Lichteinfall vorgesehenen Ende mit einer Linse 30 abgeschlossen ist.

Der Phototransistor 22 ist beispielsweise ein handelsüblicher, für das infrarote Lichtspektrum empfindlicher Silizium-NPN-Phototransistor, der ein Epoxydharzgehäuse aufweist. Im beschriebenen Ausführungsbeispiel ist die Linse 30 des Phototransistors 22 so ausgebildet, daß sie selbst als Filter wirkt und den Spektralbereich unterhalb von etwa 750 nm sperrt. Das Kantenfilterplättchen 24 ist wiederum als optisches Filter ausgebildet, das den Spektralbereich oberhalb von etwa 1000 nm sperrt.

In der Zusammenwirkung im Strahlengang entsteht also ein Bandfilter mit der Charakteristik eines Bandpasses -- nur noch der Spektralbereich von etwa 750 bis 1000 nm wird weitestgehend ungedämpft durchgelassen, während der jeweils jenseits dieser Grenzen liegende Spektralbereich gesperrt bzw. stark gedämpft wird. Diese Dämpfungscharakteristik des so entstehenden Filters ist in Fig. 5 idealisiert dargestellt, wobei in diesem Diagramm wiederum entlang der Abszisse die Wellenlänge aufgetragen ist, und entlang der Ordinate die relative Dämpfung des Filters.

Fig. 4 zeigt in einer Detailansicht eines Schnitts durch das Kantenfilterplättchen 24 den Aufbau eines solchen dielektrischen Filters.

Wie in Fig. 4 gezeigt, sind auf einem Substrat 32, welches beispielsweise Glas oder ein geeigneter Kunststoff sein kann -- in jedem Fall muß das Substrat für den in Rede stehenden Wellenlängenbereich zwischen 750 und 1000 nm durchlässig sein -- dielektrische Schichten 34 und 36 aufgebracht. Diese dielektrischen Schichten 34,36 werden beispielsweise durch Bedampfen auf das Substrat 32 aufgebracht und bestehen aus metallischem Material, beispielsweise ZnS. Zum Herbeiführen der gewünschten Filterwirkung sind die dielektrischen Schichten 34,36 im dargestellten Ausführungsbeispiel abwechselnd als aufeinandergeschichtete Folge von niedrigbrechenden Schichten (34) und hochbrechenden Schichten (36) ausgebildet. Allerdings ist jeder weitere geeignete Aufbau eines solchen Filters möglich, solange die Sperrwirkung (hier: Tiefpaßwirkung bei etwa 1000 nm) auftritt. Die gewünschte Flankensteilheit der Filtercharakteristik -- die im Idealfall möglichst senkrecht sein sollte -- wird durch geeignete Wahl der Art und Anzahl der aufzubringenden dielektrischen Schichten auf das Substrat herbeigeführt.

Alternativ kann der Phototransistor 32 auch als herkömmlicher Phototransistor ohne Filtereigenschaft im Lichteinfallsbereich ausgebildet sein: In diesem Fall würde dann die benötigte Bandfilterwirkung durch aufeinanderfolgendes Einbringen zweier geeignet ausgebildeter Kantenfilterplättchen in den Strahlengang zwischen Lichteinfall und Lichtaufnahmeelement herbeigeführt werden.

Alternativ kann natürlich auch die Linse 30, die im Ausführungsbeispiel gemäß Fig. 3 bereits eine Filterwirkung für Spektralanteile unterhalb von 750 nm aufweist (Hochpaß) zusätzlich mit einer Bedampfung/Beschichtung, beispielsweise der im Zusammenhang mit Fig. 4 beschriebenen Art, versehen werden, so daß dann der Phototransistor selbst in seinem Lichteinfallbereich ein Bandfilter der benötigten Art besitzt und keine zusätzlichen Filterelemente in den Strahlengang eingebracht werden müssen.

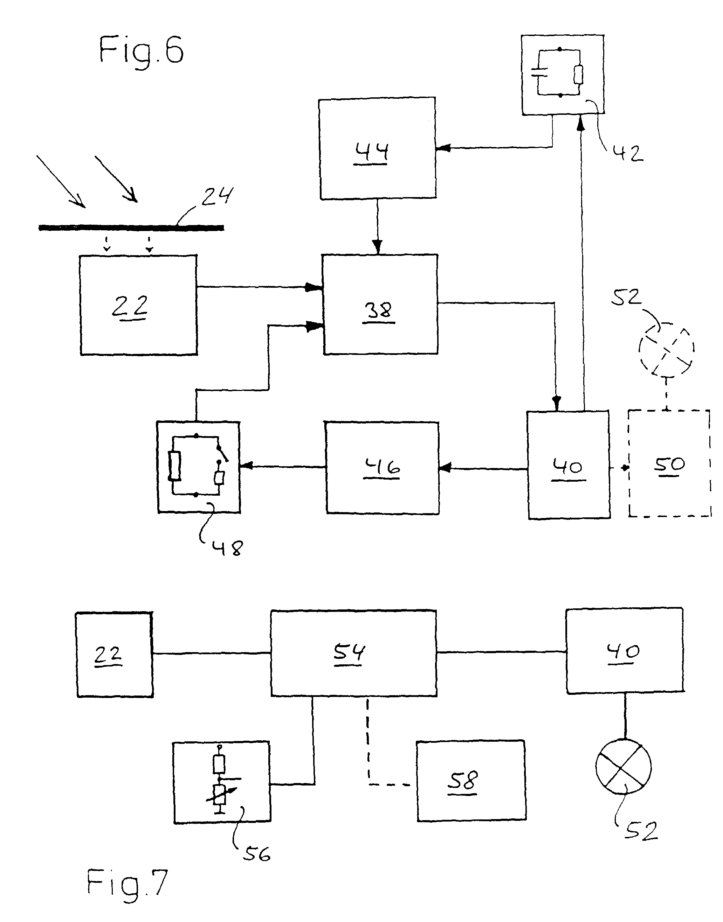

Das Blockschaltbild gemäß Fig. 6 zeigt schematisch Aufbau und Funktionsweise des Dämmerungsschalters gemäß einer weiteren bevorzugten Ausführungsform der vorliegenden Erfindung.

Die beiden schräg auf ein Filter -- beispielsweise ein im Zusammenhang mit Fig. 3 beschriebenes Kantenfilterplättchen 24 -- weisenden Pfeile deuten den Lichteinfall an. Dabei ist es, im Gegensatz zum bekannten Stand der Technik, keinesfalls notwendig, durch optische Maßnahmen das Eigenlicht der Leuchtstofflampe aus diesem Strahlengang auszublenden. Vielmehr kann auch derartiges Eigenlicht einfallen, ohne daß hierdurch Funktion und Wirkungsweise des Dämmerungsschalters negativ beeinflußt werden, wie dies im weiteren erläutert werden wird.

Einfallendes und durch das Filter 24 tretendes Licht fällt auf ein Photoelement, welches beispielsweise durch den im Zusammenhang mit Fig. 3 beschriebenen Phototransistor 22 realisiert sein kann. Das durch das Photoelement 22 erzeugte bzw. beeinflußte elektronische Signal wird von einer ersten Vergleichs- und Steuerschaltung 38 empfangen und mit einem Referenzpotential, das von einer Referenzpotentialeinheit 48 bereitgestellt wird, verglichen. Dabei ist zu berücksichtigen, daß durch die Wirkung des Filters 24 (bzw. eines eigenen Filters des Photoelements 22) lediglich ein elektrisches Signal von der ersten Vergleichs- und Steuerschaltung 38 empfangen wird, welches repräsentativ für Lichtstrahlung im Wellenlängenbereich zwischen 750 und 1000 nm ist (Bereich B in Fig. 1). Insoweit stellt das empfangene elektrische Signal also bereits ein weitestgehend vom durch die Leuchtstofflampe emittierten Lichtspektrum befreites und somit von der Leuchtstofflampe unbeeinflußtes Signal dar.

Bei Überschreiten einer geeigneten, durch die Referenzpotentialeinheit 48 vorgegebenen Schwelle, die den Einschaltzeitpunkt bei Dämmerung angibt, wird als Reaktion auf die erste Vergleichs- und Steuerschaltung 38 ein Schalter 40 aktiviert, der das Leuchtmittel einschaltet. Fällt andererseits bei eingeschaltetem Leuchtmittel (Leuchtstofflampe) der Signalpegel am Eingang der ersten Vergleichs- und Steuerschaltung 38 - - nimmt also die Umgebungshelligkeit in dem Maße zu, daß die Leuchtstofflampe auszuschalten ist -- wird die erste Vergleichs- und Steuerschaltung 38 in die Lage versetzt, unbeeinflußt von dem zu diesem Zeitpunkt auf den Filter 24 einfallenden Eigenlicht der Leuchtstofflampe festzustellen, daß die Referenzschwelle unterschritten ist und daraufhin der Schalter 40 zu deaktivieren ist.

Diese beschriebene Wirkungskette stellt den idealisierten Normalfall einer Dämmerungssteuerung einer Leuchtstofflampe gemäß der vorliegenden Erfindung dar, wobei erfindungsgemäß die Schaltung in die Lage versetzt wird, trotz einfallenden Eigenlichts bei Zunahme des Umgebungslichts (Außenlicht) festzustellen, daß die Leuchtstofflampe nicht mehr benötigt und daraufhin deaktiviert werden kann. Die vorteilhafte Wirkung kann im wesentlichen bereits dadurch erzielt werden, daß in der oben beschriebenen Weise das Eigenlicht der Leuchtstofflampe durch die beschriebenen Kantenfilter ausgeblendet wird und dadurch die nachfolgende Signalverarbeitung im wesentlichen unbeeinflußt läßt.

Allerdings gibt sich im praktischen Betrieb häufig das Problem, daß in der Anlauf- bzw. Anwärmphase einer Leuchtstofflampe unmittelbar nach dem Zünden diese zusätzlich zu dem in Fig. 1 gezeigten Spektrum Spektralanteile im vom vorliegenden Dämmerungsschalter erfaßten und ausgewerteten Bereich ausstrahlt (Bereich B in Fig. 1). Dies würde dann dazu führen, daß während dieser Anlaufphase (die typischerweise bis zu 2 Minuten dauern kann) die Lampe durch permanentes Ein- und, bewirkt durch die Lichtemission im Bereich B, darauffolgendes Ausschalten der Lampe durch die Dämmerungselektronik ein Flackern zeigen würde.

Diesem Effekt wird gemäß einer besonderen Weiterbildung der Erfindung dadurch begegnet, daß nach dem erstmaligen Aktivieren des Schalters 40 (also dem Einschalten der Leuchtstofflampe durch Entscheidung der ersten Vergleichs- und Steuerschaltung 38) ein Zeitglied 42 aktiviert wird, welches für einen voreingestellten Zeitraum, der der beschriebenen Warmlaufphase entspricht, eine weitere Signalverarbeitung des einfallenden Lichts der ersten Vergleichs- und Steuerschaltung 38 solange unterbindet, wie die vom Zeitglied 42 vorgegebene Totzeit nicht abgelaufen ist. Dieses Deaktivieren der ersten Vergleichs- und Steuerschaltung 38 während der vom Zeitglied 42 vorgegebenen Totzeit wird im Blockschaltbild gemäß Fig. 6 durch eine zweite Vergleichs- und Steuerschaltung 44 realisiert.

Als Ergebnis wird daraufhin jegliche Signalbeeinflussung der ersten Vergleichs- und Steuerschaltung 38 während der beispielsweise ersten zwei Minuten nach dem Einschalten unterdrückt, so daß zwar dadurch die Lampe in jedem Fall minimal diese Zeit lang eingeschaltet bleibt, andererseits aber auch keinerlei Beeinflussung durch Störemissionen der Leuchtstofflampe während der Warmlaufphase im Bereich (B) in Fig. 1 auftritt.

Ferner kann sich bei der praktischen Realisierung der für das optische Ausblenden des von der Leuchtstofflampe emittierten Lichtspektrums notwendigen Kantenfilter das Problem ergeben, daß diese Kantenfilter sich nur schlecht dem in Fig. 5 dargestellten idealisierten Dämpfungsverlauf anpassen lassen. Es ist daher möglich, daß trotz der Filter ein gewisser Spektralanteil der Lichtemission der Leuchtstofflampe durch die Filteranordnung hindurchtritt und zu einem -- das Meßergebnis verfälschenden -- Signal führt.

Aus diesem Grund ist mittels Schaltungseinheiten 46 und 48 eine weitere Einrichtung zur Unterdrückung des Eigenlichts der Leuchtstofflampe geschaffen, die im dargestellten Ausführungsbeispiel zwar zusammen mit der (als Bandpaß wirkenden) Kantenfilteranordnung eingesetzt ist -- aber auch allein zur Eigenlichtunterdruckung und zur Lösung des der Erfindung zugrunde liegenden Problems benutzt werden kann (ohne daß das Filter 24 dem Photoelement optisch vorgeschaltet sein müßte):

Als Reaktion auf das Einschalten der Lampe bewirkt eine dritte Steuereinheit 46, daß das zum Festlegen der Einschaltschwelle durch die erste Vergleichs- und Steuerschaltung 38 abgegriffene Referenzpotential gezielt verändert wird -- um den Betrag, wie es dem durch das Eigenlicht der Leuchtstofflampe entsprechenden zusätzlichen Betrag entspricht. Beispielsweise kann also die dritte Steuereinheit 46, getriggert durch den abfallenden Lichtpegel auf den Sensor 22 bzw. ein Signal des Schalters 40, die durch die Referenzpotentialeinheit 48 vorgegebene Schwelle gezielt herabsetzen, so daß insoweit eine Pegelsubstraktion (des Eigenlichtanteils) für die erste Vergleichs- und Steuerschaltung 38 möglich ist und diese daraufhin bei entsprechender Abnahme des Außenlichts (und damit Abnahme des Gesamtlichts) eine zum Ausschalten der Leuchtstofflampe geeignete Schwelle erhält.

In Fig. 6 ist zusätzlich mit gestrichelten Linien eine weitere mögliche Ausbildung der vorliegenden Erfindung dargestellt. Der Schalter 40 kann beispielsweise, statt ein Leuchtmittel 52 in Form der Leuchtstofflampe direkt zu aktivieren, eine Leistungsstelleinheit 50 aktivieren, die selbst wiederum die Lampe 52 geeignet ansteuert (die Leistungsstelleinheit 50 kann beispielsweise in Form eines elektronischen Vorschaltgerätes realisiert sein, oder in einem solchen integriert sein).

Insbesondere hat es sich als günstig erwiesen, wenn diese Leistungsstelleinheit -- beginnend bei voller Ansteuerleistung für die Leuchtstofflampe -- sukzessive die Steuerleistung auf ein Maß herunterregelt, wie es den tatsächlichen (Umgebungs-) Lichtverhältnissen entspricht, denn oftmals rechtfertigt ein noch vorhandenes Restlicht in der Umgebung, das den Dämmerungsschalter bereits aktiviert, keine volle Leistung der dadurch eingeschalteten Leuchtstofflampe. Durch eine solche Leistungsstelleinheit 50 könnte dann mit entsprechender Einsparwirkung für den Energieverbrauch die Helligkeit der Leuchtstofflampe in Abhängigkeit vom Umgebungslicht geeignet eingestellt und geregelt werden.

Dabei hat es sich als vorteilhaft erwiesen, eine solche Leistungsstelleinheit die Ansteuerleistung für das Leuchtmittel nicht kontinuierlich steuern zu lassen, sondern diskrete Leistungsstufen vorzugeben; geeignet wären beispielsweise 100 %, 75 %, 50 % und 25 % der maximalen Steuerleistung für das Leuchtmittel.

Fig. 7 zeigt eine Dämmerungsschalteranordnung gemäß einer weiteren bevorzugten Ausführungsform der Erfindung. Wie in Fig. 7 gezeigt, ist zwischen der Sensoreinheit 22 -- die insoweit mit der in Fig. 6 gezeigten Sensoreinheit übereinstimmt und fakultativ eine Filtereinrichtung der oben im Zusammenhang mit den Fig. 3 bzw. 4 beschriebenen Art aufweisen kann -- und dem Schalter 40 eine vierte Steuereinheit vorgesehen, die bevorzugt als mit geeigneter Software programmierter Microcontroller ausgebildet ist. Mit dieser vierten Steuereinheit ist eine Schwellwerteinheit 56 verbunden, sowie gemäß einer weiteren Ausführungsform ein nicht-flüchtiger, lösch- und wiederbeschreibbarer Speicher 58.

Die vierte Steuereinheit 54 realisiert im Grundsatz das im Zusammenhang mit der Fig. 6 oben beschriebene Prinzip der Kompensation durch aktive Schwellenverschiebung der Ansprechschwelle bei eingeschalteter Leuchtstofflampe 52. Allerdings unterscheidet sich die Wirkungsweise der vierten Steuereinheit 54 insoweit von den vorhergehenden Ausführungsformen, als die Einheit 54 bei aktivierter Leuchtstofflampe 52 nicht etwa die Ansprechschwelle um einen (zwar geeignet vorgewählten) aber letztendlich doch konstanten Schwellenwert verschiebt, sondern den Betrag der Schwellenwertverschiebung selbst abhängig von der jeweiligen Intensität des einfallenden Eigenlichtes macht.

Beispielsweise kann nämlich je nach der Einbaulage einer den Dämmerungsschalter aufweisenden Lampe der Anteil des auf den Sensor zurückreflektierten Eigenlichtes stark schwanken; und ein beispielsweise durch Widerstände bestimmter Betrag der Ansprechschwellenverschiebung kann diesen durch den Einsatzort bedingten Schwankungen nicht hinreichend Rechnung tragen, so daß trotz dieser Kompensation der Eigenlichtanteil so hoch sein kann, daß er den fest eingestellten Kompensationsanteil übersteigt. Dies würde wiederum zu dem oben beschriebenen nachteiligen Flackern des Lichtes führen. Im umgekehrten Fall (d.h. bei sehr geringer Eigenlichtreflektion) könnte die voreingestellte konstante Schwellenwertverschiebung den Eigenlichtanteil überkompensieren. Dies hätte zur Folge, daß die Lampe bei einer sehr viel höheren Helligkeit ausgeht, als bei der sie angeht -- also eine große Hysterese. Auch dieses Verhalten ist nachteilig.

Die im Zusammenhang mit dem Blockschaltbild in Fig. 7 gezeigte Anordnung verbessert die im Zusammenhang mit den Fig. 6 beschriebene Schaltung dahingehend weiter, daß die vierte Steuereinheit 54 das auf den Sensor 22 einfallende Eigenlicht konkret mißt und aus einem Vergleich des einfallenden Lichtes bei eingeschalteter Lampe (d.h. Umgebungslicht und Eigenlicht fallen ein) bzw. bei ausgeschalteter Lampe (nur Umgebungslicht fällt ein) den Eigenlichtanteil rechnerisch ermittelt.

Um Fehlmessungen zu vermeiden, werden die jeweiligen Meßwerte über einen geeigneten Zeitraum (z.B. einige Minuten) gemittelt und zwischengespeichert, so daß für die Differenzbildung zwei hinreichend genaue Meßwerte bereitstehen. Die Differenz ergibt dann den Eigenlichtanteil, der unmittelbar dem Betrag der Schwellenwertverschiebung proportional ist. Ergänzend kann dieser Wert in einem nicht-flüchtigen Speicher -- z.B. einem EEPROM -- abgelegt werden, so daß er auch nach einem Stromausfall verfügbar ist.

In der vierten Steuereinheit 54 kann ferner auf geeignete Weise -- durch Anpassung der Software -- eine Hysterese realisiert werden, über welche dann der Schalter 40 angesteuert wird.

Im Betrieb -- ausgehend von hellem, aber abnehmendem Umgebungslicht, also bei noch nicht aktivierter Lampe -- wird bei Erreichen der Einschaltschwelle die Lampe aktiviert. Gleichzeitig wird der zuletzt gemessene Wert der (reinen) Umgebungshelligkeit als erster Wert für die Differenzbildung im Speicher abgelegt. Unmittelbar als Reaktion auf das Einschalten der Lampe oder um eine vorbestimmte Zeit (z.B. die Anwärmzeit -- s.o.) verzögert, findet dann die Messung des Gesamtlichteinfalls (also: Eigenlicht + Umgebungslicht) statt, die wiederum über einen vorbestimmten, vom Dämmerungsverlauf begrenzten Zeitraum stattfindet und gemittelt den zweiten Wert für die Differenzbildung ergibt. Die Ausschaltschwelle wird dann aus der Differenz dieses zweiten Werts und des ersten Werts, gegebenenfalls unter Berücksichtigung einer vorbestimmten Hysterese, errechnet.

Der Vorteil einer solchen, das Eigenlicht konkret messenden Eigenlichtkompensation liegt also in der fortgesetzten Funktionsfähigkeit und variablen Einsetzbarkeit des Dämmerungsschalters auch bei durch hohe Reflexion großem Eigenlichtanteil sowie in einer wesentlich geringeren Hysterese, die nämlich klein gehalten werden kann, da die Ausschaltschwelle entsprechend dem Eigenlichtanteil verschoben wird, oder der Meßwert entsprechend kompensiert wird. Die Lampe wird daher nur bei gering unterschiedlicher Umgebungshelligkeit ein- bzw. ausgeschaltet.

Gemäß einer weiteren bevorzugten Ausführungsform kann die beispielsweise durch die Einheit 56 in der Fig. 7 erfolgende manuelle Voreinstellung der Ansprechschwelle auch im Wege eines Lernmodus realisiert sein: In diesem Fall würde beispielsweise die Schwellwerteinrichtung 56 in Fig. 7 statt eines einstellbaren Widerstandes zur manuellen Voreinstellung der Ansprechschwelle eine aus einer Betätigungseinrichtung, einer Erfassungseinheit und einem Speicher gebildete Lerneinheit aufweisen. Eine Bedienperson könnte dann bei einer die Bildung des Schwellenwertes geeigneten Umgebungshelligkeit (bei ausgeschalteter Leuchtstofflampe) durch die Betätigungseinrichtung die Erfassungseinheit aktivieren, welche wiederum einen dem augenblicklichen Umgebungslicht entsprechenden Schwellenwert (durch Messung) ermittelt und das entsprechende Meßsignal in einem Speicher ablegt. Dieses gespeicherte Meßsignal stünde dann solange für zukünftigen Zugriff als voreingestellter Schwellenwert zur Verfügung, bis eine Bedienperson durch erneute Betätigung den eingestellten und gespeicherten Wert mit einem anderen überschreibt.

Bei den beschriebenen Ausführungsformen der Erfindung, deren Wirkungsweise auf einer durch den Einschaltzustand der Lampe getriggerten Veränderung der Ansprechschwelle -- sei es um einen konstanten Wert, wie in der Fig. 6, oder um einen den tatsächlichen Eigenlichtverhältnissen entsprechenden variablen Schwellenwert, wie in der Fig. 7 beschrieben -- beruht, sei zudem darauf hingewiesen, daß die erfindungsgemäßen vorteilhaften Wirkungen nicht nur im Zusammenhang mit Leuchtstofflampen erreichbar sind, sondern vielmehr diese Erfindung auf beliebige Lampentypen und Leuchtmittel anwendbar ist, deren Eigenlicht nachteilig einen Lichtsensor für das Umgebungslicht beeinträchtigt; also eine Eigenlichtkompensation notwendig ist.

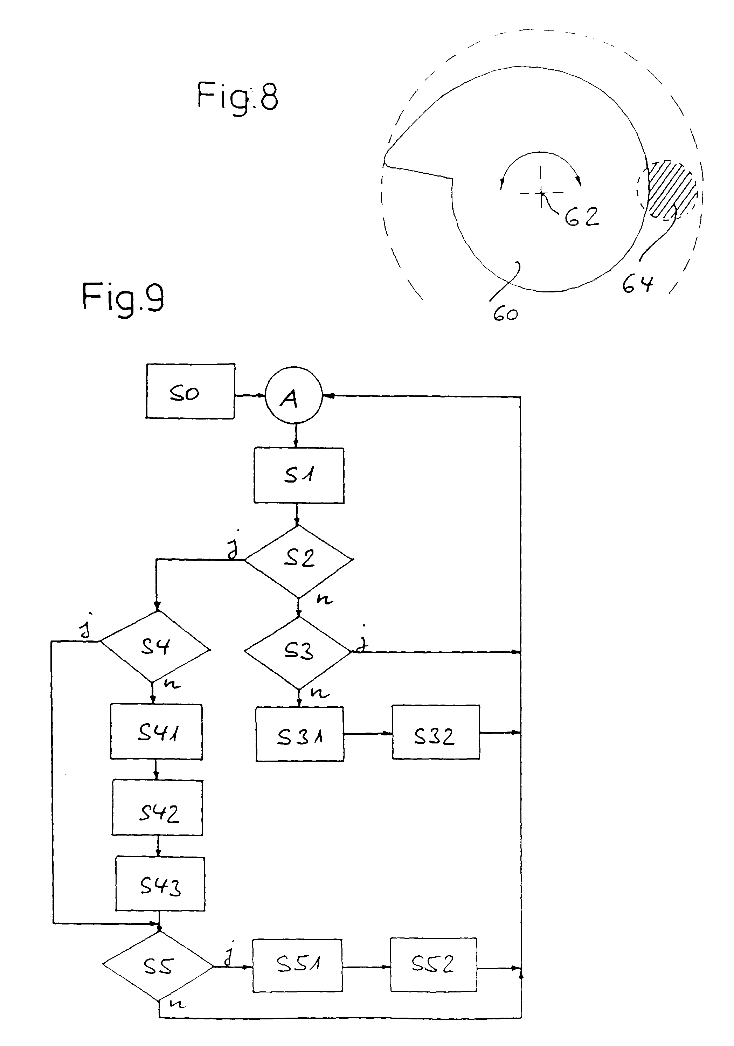

Während bei den vorbeschriebenen Ausführungsformen ein Photoelement verwendet wurde, welches beispielsweise durch den im Zusammenhang mit der Fig. 3 beschriebenen (Silizium-) Phototransistor realisiert wurde, ist es gemäß einer weiteren, bevorzugten Ausführungsform (best mode) möglich, diesen Phototransistor durch ein CdS-Photoelement (LDR) zu ersetzen, wobei ein solcher LDR den Vorteil hat, mit seiner breitbandigen spektralen Empfindlichkeit der Empfindlichkeit des menschlichen Auges nahezukommen und somit eine physiologisch günstige Steuerung des erfindungsgemäßen Dämmerungsschalters ermöglicht. Ein solcher -- an sich bekannter -- LDR weist allerdings die Eigenschaft auf, daß seine Empfindlichkeitskennlinie (bezogen auf den Pegel des Lichteinfalls) stark logarithmisch ist, so daß eine bedienungsfreundliche Einstellung der Ansprech- bzw. Empfindlichkeitsschwelle des LDR-Photoelementes -- insbesondere im Zusammenhang mit den oben dargestellten Regelverläufen und deren schaltungstechnischer Implementierung -- nicht unproblematisch ist. Erfindungsgemäß wird daher vorgeschlagen, bei einer Verwendung eines LDR-Photoelmentes im Zusammenhang mit dem in der Fig. 7 dargestellten Dämmerungsschalter die mittels eines einstellbaren Widerstands realisierte Stellwerteinrichtung 56 durch eine von einer Bedienperson betätigbare, mechanische Blendeneinrichtung 60 zu ersetzen, die -- wie in der Fig. 8 gezeigt -- als Scheibe mit sich logarithmisch aufweitenden Abstand des Randes zu einer Mittelachse 62 ausgebildet ist. Wie in der Fig. 8 gezeigt, wird eine im Gehäuse gebildete Öffnung 64 für den LDR je nach Drehposition der Scheibe 60 mehr oder weniger abgedeckt, wobei die dargestellte Formgebung der Blendenscheibe 60 die logarithmische (bzw. exponentielle) Kennlinie des LDR dadurch ausgleicht, daß ein Verdrehen der Scheibe 60 eine logarithmische Abdekkung der Öffnung 64 hervorruft.

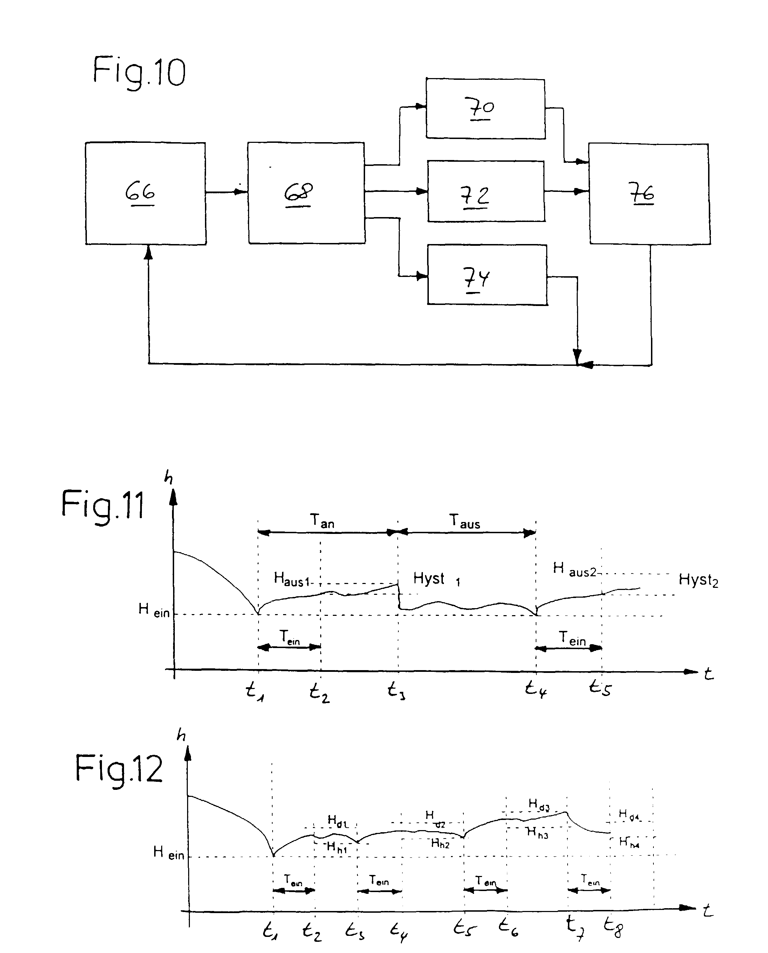

Im Zusammenhang mit der Fig. 9 bzw. der zugehörigen Darstellung der Signalverlaufs gemäß Fig. 11 wird nachfolgend eine erfindungsgemäße Steuerung einer Lampe -- nicht notwendigerweise beschränkt auf eine Leuchtstofflampe, sondern prinzipiell für alle Lampentypen geeignet -- beschrieben, die bevorzugt mit der in der Fig. 7 als Blockschaltbild dargestellten Ausführungsform unter Einsatz eines Mikroprozessors bzw. Mikrocontrollers realisiert ist; für den Fachmann ist es jedoch selbstverständlich, daß sämtliche in der Fig. 9 (und auch in der Fig. 10) dargestellten Funktionsabläufe bzw. Funktionsblöcke durch entsprechende Hardwarekomponenten realisiert sein können.

In Schritt S0 -- bei ausgeschaltetem Leuchtmittel -- wird durch die Lichterfassungseinheit (beispielsweise der vorstehend im Zusammenhang mit Fig. 3 beschriebene Phototransistor oder der LDR) die Umgebungshelligkeit festgestellt und als über einen vorbestimmten Zeitraum gemittelter Wert elektronisch gespeichert.

In Schritt S1 wird dann kontinuierlich die gesamte, auf das Lichterfassungselement fallende Helligkeit ermittelt und zusätzlich der Schwellwert für das Einschalten (vorgegeben durch eine elektronische Einstellung entsprechend der Einheit 56 oder eine mechanische Einstellung gemäß Blende 60) festgestellt. In Schritt S2 wird daraufhin entschieden, ob das Leuchtmittel eingeschaltet ist (j) oder sich noch im ausgeschalteten Zustand befindet (n).

Zur Verdeutlichung des Ablaufes soll angenommen werden, daß der Dämmerungsschalter gerade erst in Betrieb genommen wurde, sich die Lampe also noch im ausgeschalteten Zustand befindet, während andererseits die Umgebungshelligkeit so gering ist, daß diese unter dem eingestellten Stellwert liegt.

Folglich führt die darauffolgende Entscheidung im Schritt S3 (Feststellung, ob der in Schritt S1 ermittelte Helligkeitswert über dem Schwellwert liegt) zu einer negativen Entscheidung (n), woraufhin in Schritt S31 das Leuchtmittel aktiviert wird (Zeitpunkt t₁ in Fig. 11). Daraufhin wird in Schritt S32 eine Verzögerungszeit Tₑᵢₙ aktiviert, die die Mindesteinschaltdauer des Leuchtmittels nach einer Aktivierung (Schritt S31) vorgibt; diese Zeitdauer Tₑᵢₙ dauert bis zum Zeitpunkt t₂, woraufhin dann der Verfahrensablauf zum Knoten A zurückverzweigt.

Beim zweiten Durchlauf durch die Schleife werden in S1 wieder der Helligkeitswert bzw. der vorgegebene Schwellwert erfaßt, woraufhin in S2 nunmehr die Feststellung erfolgt, daß sich das Leuchtmittel im eingeschalteten Zustand befindet (j). In Schritt S4 wird dann geprüft, ob ein Ausschaltwert (d.h. ein Helligkeitswert, bei welchem der Dämmerungsschalter das Leuchtmittel deaktiviert) bereits festgelegt worden ist; im derzeitigen Betriebszustand ist dies noch nicht der Fall (n). Daraufhin wird im Schritt S41 durch Abfrage einer vorbestimmten, gespeicherten Hysteresewert-Tabelle ein Ausschaltwert bestimmt, der für den aktuellen Helligkeitswert (erfaßt gemäß S1) vorbestimmt ist, im darauffolgenden Schritt S42 erfolgt eine Korrektur dieses mit einer Hysterese versehenen Ausschaltwertes in Abhängigkeit von vorhergehenden Betriebszuständen (nähere Erläuterung unten), woraufhin dann in Schritt S43 der endgültige Ausschaltwert durch Addition des Hysterese-Tabellenwertes gemäß S41 und des Korrekturwertes gemäß S42 ermittelt und gespeichert wird (Wert Hₐᵤₛ₁ in Fig. 11 zum Zeitpunkt t₂; auch der momentan gültige Helligkeitswert betrifft t₂). In der Fig. 11 ist die so gebildete, auf dem aktuellen (d.h. Zeitpunkt t₂) Helligkeitswert aufbauende Hysterese mit "Hyst1" bezeichnet. Erst wenn die erfaßte Gesamthelligkeit (d.h. Umgebungshelligkeit und, da die Lampe aktiviert ist, auch das Eigenlicht) den Ausschaltwert Hₐᵤₛ₁ gemäß dieser Hysterese überschreiten, wird das Leuchtmittel wieder deaktiviert.

Diese Feststellung findet nunmehr im Schritt S5 statt, in welchem der aus Helligkeitswert + (korrigiertem) Hysteresewert ermittelte Ausschaltwert mit dem tatsächlichen Helligkeitswert verglichen wird; zum derzeitigen Betriebszeitpunkt, da der Ausschaltwert soeben erst in den Schritten S41 bis S43 ermittelt wurde, ist dies in der Regel noch nicht der Fall, so daß (Zweig n) der Ablauf zum Knotenpunkt A in Fig. 9 zurückverzweigt. Da nunmehr der Ausschaltwert festliegt, nimmt das Ablaufdiagramm bei weiteren, kontinuierlichen Durchläufen den Pfad: A - S1 - S2(j) - S4 (j) - S5, bis der Vergleich in Schritt S5 ergibt, daß die Gesamthelligkeit in der Zwischenzeit soweit angestiegen ist, daß sie den festgelegten und gespeicherten Ausschaltwert überschreitet. Bei der Darstellung in Fig. 11 -- die insoweit einen beispielhaften Gesamthelligkeitsverlauf aufgetragen über der Zeit wiedergibt -- ist dies zum Zeitpunkt t₃ der Fall: Das Ablaufdiagramm verzweigt dann im Schritt S5 (Gesamthelligkeit größer Ausschaltwert: j) zum Schritt S51, deaktiviert dort das Leuchtmittel und aktiviert im Schritt S52 eine weitere Verzögerungszeit, die den minimalen Zeitraum angibt, bis das Leuchtmittel überhaupt wieder aktiviert werden kann. Das Deaktivieren des Leuchtmittels erfolgt zum Zeitpunkt t₃, wobei dies, wie in Fig. 11 gezeigt, bedingt durch den Wegfall des Eigenlichtanteils einen deutlichen Abfall der erfaßten Gesamtlichtmenge zur Folge hat. Zwischen dem Einschaltzeitpunkt t₁ und dem Ausschaltzeitpunkt t₃ erstreckt sich somit die Einschaltphase Tₐₙ, die ebenfalls mit dem Ausschalten des Leuchtmittels in S51 erfaßt und gespeichert wird.

Während des darauffolgenden Zeitverlaufes bis zum Zeitpunkt t₄ bewegt sich die periodisch in S1 erfaßte Helligkeit (nur Umgebungshelligkeit, da das Leuchtmittel abgeschaltet) stets oberhalb des Schwell- bzw. Sollwertes Hₑᵢₙ. In der Fig. 9 ist der Ablauf der Verfahrensschritte also wie folgt: S1 - S2(n) - S3(j) - A - S1 usw.

Erst wenn zum Zeitpunkt t₄ die Umgebungshelligkeit wieder unter den Schwellwert Hₑᵢₙ sinkt, führt der Vergleich in Schritt S3 zum erneuten Aktivieren des Leuchtmittels (S31) sowie der minimalen Einschaltdauer Tₑᵢₙ bedingt durch die Verzögerungseinheit S32. Gleichzeitig wird im Schritt S31 -- der insoweit eine Ausschaltphase Tₐᵤₛ des Leuchtmittels beendet -- die Zeitdauer von Tₐᵤₛ festgestellt und gespeichert.

Wenn dann im darauffolgenden Zyklus A - S2(j) - S4(n) - S41 - S42 - S43 - usw. wieder ein neuer Ausschaltwert festgelegt wird, fließt in diese Festlegung gemäß der Schritte S41 bis S43 in S42 die Ausschaltdauer Tₐᵤₛ bzw. die vorgehende Einschaltdauer Tₐₙ ein: Wenn beispielsweise die ausgeschaltete Phase Tₐᵤₛ nur relativ kurz war (Bedeutung: eine kurze Zeit nach dem Erloschen des Leuchtmittels schaltet der Dämmerungsschalter bereits wieder ein, weil der Pegel des Umgebungslichtes wieder unter die Einschaltschwelle gefallen war, und möglicherweise nur ein vorübergehender Beleuchtungszustand -- etwa vorbeiziehende Wolken oder kurze Sonnenperioden -- das Deaktivieren des Leuchtmittels veranlaßt hatte), wird die nunmehr erfolgende Bildung des Ausschaltwertes (bzw. der Hysterese für den Ausschaltwert) diesem Umstand dadurch Rechnung tragen, daß die Hysterese entsprechend größer gewählt wird. Dieser Zustand ist in Fig. 11 zum Zeitpunkt t₅ gegeben. Da die ausgeschaltete Phase Tₐᵤₛ als zu kurz angesehen wird, wird nunmehr im Schritt S42 dieser Umstand berücksichtigt und ein neuer Ausschaltwert Hₐᵤₛ₂ gebildet, der, bezogen auf den zugehörigen (Gesamt-) Beleuchtungspegel zum Zeitpunkt t₅ einen größeren Abstand aufweist (und somit eine größere Hysterese Hyst2 ausbildet) als der erste Ausschaltwert Hₐᵤₛ₁ zum Zeitpunkt t₂. (In entsprechender Weise könnte auch eine kleinere Hysterese gebildet werden, dann, wenn etwa eine zuvorgehende Einschaltperiode zu lang gewesen ist).

Verallgemeinert wird also durch diese von den Betriebsparametern Einschaltzeit bzw. Ausschaltzeit abhängige Hysteresebildung zum einen zuverlässig verhindert, daß das Leuchtmittel kurzfristig nach dem Einschalten wieder ausschaltet (womit ein Flackern verhindert wird), und andererseits gestattet diese aktive Schwellwertlosung, die, wie sich aus der obigen Darstellung unmittelbar ergibt, stets am momentanen Helligkeitswert ansetzt und auf diesen dann einen Hysteresewert aufsetzt, eine automatische und von einer externen Einstellung unabhängige Berücksichtigung der Beleuchtungsstärke des Eigenlichts (die z.B. durch Alterungseffekte od.dgl. variieren kann). Im Ergebnis wird dadurch nicht nur der Bedienungskomfort und das Beleuchtungsverhalten des erfindungsgemäßen Dämmerungsschalters positiv beeinflußt, sondern zudem ermöglicht eine solche, weitgehend programmtechnisch (alternativ: durch Hardware) zu implementierende Lösung eine einfache und kostengünstige Serienfertigung.

Im Zusammenhang mit den Fig. 10 bzw. 12 wird nachfolgend eine Abwandlung der vorbeschriebenen Ausführungsform beschrieben. Während durch den Steuerungsablauf des erfindungsgemäßen Dämmerungsschalters gemäß Fig. 9 ein dynamisches Ein- bzw. Ausschalten des Leuchtmittels mit variabler Schwellenverschiebung erfolgte, liegt es auch im Rahmen der Erfindung, durch den erfindungsgemäßen Dämmerungsschalter ein Leuchtmittel anzusteuern, welches (stufenweise oder stufenlos) in der Ansteuer- und Lichtleistung veränderbar ist. Im Grundsatz ist für eine solche Anwendung das Ablaufdiagramm gemäß Fig. 9 unmittelbar anwendbar, wenn der Schritt S31 (Leuchtmittel ein) ersetzt wird durch einen Prozess "Leuchtmittel eine Stufe (einen vorbestimmten Betrag) heller", und entsprechend Schritt S51 (Leuchtmittel aus) ersetzt ist durch "Leuchtmittel eine Stufe (einen bestimmten Betrag) dunkler". In diesem Fall würde dann eine stufenweise Anpassung der Lichtstärke (bis hinauf zur Volleistung bzw. hinab zum vollständigen Abschalten) möglich sein. Auch wenn dann theoretisch noch eine variable Hysterese- bzw. Schaltschwellenanpassung der in Fig. 9 bzw. Fig. 11 gezeigten Art möglich ist, empfiehlt es sich allerdings, für den Fall des stufenlos bzw. stufenweise geschalteten (gedimmten) Leuchtmittels, einen festen Hystereseabstand zur Vermeidung zusätzlicher Schaltungskomplexität zu verwenden.

Einen solchen Anwendungsfall zeigt Fig. 10: Eine Erfassungs- bzw. Messeinrichtung 66 stellt die Umgebungshelligkeit (ohne Eigenlicht) bzw. die Gesamthelligkeit (Umgebungslicht + Eigenlicht) fest. In einer Vergleichereinheit 68, die zusätzlich eine Speichereinrichtung für Schwellenwerte sowie eine Hystereseeinrichtung, etwa der im Zusammenhang mit S41 in Fig. 9 beschriebenen Art, aufweist, wird die Entscheidung getroffen, ob das Leuchtmittel eine Stufe heller gesteuert werden soll (erste Steuereinrichtung 70), dunkler gesteuert werden soll (zweite Steuereinrichtung 72) oder im Helligkeitswert unveränderbar bleibt (dritte Steuereinrichtung 74). Über eine Verzögerungseinheit 76, die die Minimalzeit vorgibt, während welcher die höher (erste Steuereinrichtung 70) oder niedriger (zweite Steuereinrichtung 72) geschaltete Lichtleistung auf dieser Stufe bleiben soll, wird die Ablaufschleife zurück zur Erfassungseinheit 66 geschlossen.

Fig. 12 verdeutlicht exemplarisch den Steuerungsablauf einer solchen Dämmerungsschalteranordnung für ein stufenweise geschaltetes (gedimmtes) Leuchtmittel, wobei wiederum der Helligkeitsverlauf über der Zeit aufgetragen ist und die jeweiligen Hysteresen markiert sind: Zum Zeitpunkt t₁ fällt das Umgebungslicht unter den Schwellwert Hₑᵢₙ, das Leuchtmittel wird eingeschaltet, und es verbleibt die minimale Einschaltzeit Tₑᵢₙ im eingeschalteten Zustand. Zum Zeitpunkt t₂ wird dann eine -- doppelte -- Hysterese mit oberem Hysteresewert H_{d1} für das Herunterschalten und unterem Hysteresewert Hₕ₁ für das Heraufschalten gebildet. Zum Zeitpunkt t₃ unterschreitet die Gesamtlichtmenge (Eigenlicht auf der ersten Schaltstufe + Umgebungslicht) den unteren Hysteresewert Hₕ₁, woraufhin dann durch Wirkung der ersten Steuereinrichtung 70 die nächsthöhere Leistungsstufe aktiviert wird und wiederum die Mindesteinschaltdauer Tₑᵢₙ auf dieser Aktivierungsstufe verbleibt. Zum Zeitpunkt t₄ erfolgt dann eine erneute Hysteresebildung, wiederum durch Feststellen eines oberen, Herunterschalt-Hysteresewertes H_{d2}, sowie eines unteren Heraufschalt-Hysteresewertes Hₕ₂ (im Gegensatz zur vorbeschriebenen, Ein-/Aus-Ausführungsform gemäß Fig. 9, Fig. 11 ist allerdings im vorliegenden Ausführungsbeispiel der Hystereseabstand, verglichen mit der ersten Hysterese an t₂ konstant). Wenn dann wiederum zum Zeitpunkt t₅ der Gesamt-Helligkeitswert unter die Hochschaltschwelle Hₕ₂ fällt, wird durch Wirkung der ersten Steuereinrichtung 70 die nunmehr folgende Leistungsstufe aktiviert und für die Mindesteinschaltdauer Tₑᵢₙ belassen, bis bei t₆ wieder die nächste Hysteresebildung erfolgt.

In diesem Betriebsbeispiel überschreitet allerdings nun zum Zeitpunkt t₇ der Gesamtlichtpegel den oberen Hysteresewert H_{d3} (d.h. die Herunterschaltschwelle), so daß durch Wirkung der zweiten Steuereinrichtung 72 wieder auf das nächst tiefere Leistungsniveau der Steuerleistung für das Leuchtmittel geschaltet wird, und auch dieser neue Schaltzustand um die Verzögerungszeit Tₑᵢₙ verzögert wird. Im beschriebenen Ausführungsbeispiel ist diese durch die Verzögerungseinheit 76 generierte Verzögerungszeit Tₑᵢₙ kürzer als die in den Fig. 9, 11 beschriebenen Verzögerungszeiten, da durch die verschiedenen Schaltschwellen und Leistungsstufen insoweit eine variablere Lichtsteuerung ermöglicht ist.

Somit ist also auch im Fall einer Ansteuerung des Leuchtmittels mit variabler Leistung (im Gegensatz zur oben beschriebenen Ein-/Aus-Lösung) das erfindungsgemäße Verschieben des Ansprechpunktes für die Hysterese bzw. des Ausschaltwertes möglich, so daß stets auf optimale Weise den tatsächlichen Umgebungs- und Eigenlichtbedingungen Rechnung getragen werden kann.

Auch wenn die vorstehend im Zusammenhang mit den Fig. 8 bis 12 beschriebenen Ausführungsbeispiele sich grundsätzlich für den Einsatz mit jedem beliebigen Leuchtmittel eignen, ist die Verwendung zusammen mit einer Leuchtstofflampe, ggf. in Verbindung mit einem elektronischen Vorschaltgerät, besonders günstig. Insbesondere bei alterungsbedingten (Eigenlicht-) Schwankungen bei Leuchtstoffröhren ermöglicht nämlich die vorliegende Erfindung stets eine vollständige und pegelunabhängige Eigenlichtunterdrückung. Darüber hinaus wäre es auch möglich, als zusätzliche Maßnahme die vorstehend beschriebene, spektrale Filterlösung bei diesen Ausführungsformen einzusetzen.

Noch eine weitere Ausbildung der vorliegenden Erfindung sieht den Einsatz zweier Lichtsensoren vor, wobei einer mit etwa der spektralen Empfindlichkeit des menschlichen Auges (z.B. ein LDR) arbeitet, und der andere seine maximale Empfindlichkeit im Bereich des Emissionsmaximums der Leuchtstoffröhre aufweist. Aus dem Signalverhältnis dieser beiden Sensoren wäre dann der Eigenlichtanteil ermittelbar, so daß festgestellt werden kann, ob die Umgebungslichtmenge nach dem Abschalten des Leuchtmittels unterhalb der vorgewählten Schwellen liegen wurde. Durch diese Lösung könnte der Einsatz einer Hysterese vollständig verhindert werden, da auf einen bestimmten Helligkeitswert geregelt werden kann.

Im Hinblick auf die erfindungsgemäße Ausblendung des auf den Sensor fallenden Eigenlichts mittels der beschriebenen Filter sind diese nicht konkret auf das für das Ausführungsbeispiel angegebene Band 750 - 1000 nm beschrankt - vielmehr ist die vorliegende Erfindung auf alle Eigenlichtquellen anwendbar, deren Spektrum aus dem Erfassungsspektrum mittels Filter ausblendbar ist, wobei das verbleibende Spektrum eine Beurteilung der Umgebungshelligkeit noch ermöglichen muß.

Gemäß einer weiteren bevorzugten Weiterbildung der vorliegenden Erfindung kann der Dämmerungsschalter mit einem Anwesenheits- bzw. Bewegungssensor gekoppelt werden. Dies kann insbesondere dadurch geschehen, daß das Photoelement, das im oben beschriebenen Dämmerungsschalter für die Erfassung des Umgebungslichts eingesetzt wird, mit den Sensorelementen eines Bewegungssensors in einer Einheit zusammengefaßt wird, wobei dann die Kantenfilter für den Phototransistor gegebenenfalls geeignet für diesen vorzusehen wären.

Eine solche gemeinsame Sensoreinheit könnte bevorzugt modular bzw. abnehmbar und mit einem geeigneten Stecker versehen -- alternativ drahtlos angebunden -- ausgebildet sein und so variabel an entsprechend vorgesehene Positionen eines z.B. Leuchtstofflampen und die zugehörige Bewegungserfassungs- und Dämmerungsschaltungselektronik aufweisenden, mit Leuchtstofflampen bestückten Beleuchtungssystem angesteckt bzw. auf andere geeignete Art befestigt werden. Damit dann eine Aktivierung des Leuchtmittels nur dann erfolgt, wenn auch der Bewegungs/Anwesenheitssensor eine Person feststellt, konnten der Dämmerungsschalter einerseits und der Bewegungssensor andererseits mittels einer logischen UND-Verknüpfung miteinander verbunden sein.

## Patentansprüche

1. Dämmerungsschalter für ein Leuchtmittel (12; 52) mit einem auf Umgebungslicht reagierenden Lichterfassungselement (22) und einer als Reaktion auf ein Ausgangssignal des Lichterfassungselementes (22) zum Aktivieren oder Deaktivieren des Leuchtmittels (12; 52) eingerichteten Schaltungseinheit (38; 54),
wobei
die Schaltungseinheit eine Bezugsschwelleneinrichtung (48; 68) aufweist, das Aktivieren oder Deaktivieren des Leuchtmittels (12; 52) in Abhängigkeit davon erfolgt, ob das Ausgangssignal des Lichterfassungselementes (22) eine von der Bezugsschwelleneinrichtung (48; 68) erzeugte Schwelle überschreitet bzw. unterschreitet, und eine jeweilige Höhe der erzeugten Schwelle von einer von dem Lichterfassungselement (22) erfaßten Lichtmenge abhängig ist,
gekennzeichnet durch eine Verzögerungseinrichtung (S32, S52; 42, 44; 76), die so ausgebildet ist, daß sie für eine vorbestimmte Zeitspanne als Reaktion auf ein Aktivieren des Leuchtmittels durch die Schaltungseinheit verhindert, daß diese auf das Ausgangssignal des Lichterfassungselementes (22) reagiert.

2. Dämmerungsschalter nach Anspruch 1, dadurch gekennzeichnet, daß die Bezugsschwelleneinrichtung (48; 68) Mittel aufweist, die die Schwelle bei aktiviertem Leuchtmittel um einen Betrag herabsetzen, der i.w. dem Betrag von auf das Lichterfassungselement (22) einfallenden Lichts des Leuchtmittels (12; 52) entspricht.

3. Dämmerungsschalter nach Anspruch 1 oder 2, dadurch gekennzeichnet, daß die Bezugsschwelleneinrichtung eine Meßeinrichtung (54; 66) aufweist, die zum Messen von auf das Lichterfassungselement (22) bei aktiviertem und bei deaktiviertem Leuchtmittel einfallenden Lichts ausgebildet ist, und eine Hysterese-Einrichtung (S41 - S43; 68) aufweist, die zum Erzeugen einer ersten, unteren Schwelle und einer zweiten, oberen Schwelle eingerichtet ist und sowohl die erste, untere Schwelle als auch die zweite, obere Schwelle als Reaktion auf ein Meßsignal der Meßeinrichtung (54; 66) erzeugt.

4. Dämmerungsschalter nach Anspruch 3, dadurch gekennzeichnet, daß die Meßeinrichtung (54; 66) so ausgebildet ist, daß sie beim Erfassen des einfallenden Lichtes bei aktiviertem und bei deaktiviertem Leuchtmittel jeweilige, über einen vorbestimmten Zeitraum erfaßte Mittelwerte bildet und speichert.

5. Dämmerungsschalter nach Anspruch 3 oder 4, dadurch gekennzeichnet, daß die Hysterese-Einrichtung (S41 - S43; 68) so ausgebildet ist, daß der Abstand zwischen der ersten, unteren Schwelle und der zweiten, oberen Schwelle variabel und abhängig ist von der durch die Meßeinrichtung (54; 66) gemessenen Lichtmenge.

6. Dämmerungsschalter nach einem der Ansprüche 3 bis 5, dadurch gekennzeichnet, daß die Hysterese-Einrichtung (S41 - S43; 68) eine Speichereinrichtung zum Auslesen von jeweiligen aus einer Mehrzahl von vorbestimmten, gespeicherten Schwellenwerten für die erste und die zweite Schwelle aufweist.

7. Dämmerungsschalter nach einem der Ansprüche 1 bis 6, dadurch gekennzeichnet, daß die Bezugsschwelleneinrichtung eine Stelleinrichtung (56; 60, 64) zum zusätzlichen, manuellen Verändern der Schwelle aufweist.

8. Dammerungsschalter nach Anspruch 7, dadurch gekennzeichnet, daß das Lichterfassungselement als LDR ausgebildet ist und die Stelleinrichtung eine Lochblende (60, 64) aufweist, die zum Kompensieren eines i.w. logarithmischen Empfindlichkeitsverlaufs des LDR ausgebildet ist.

9. Dammerungsschalter nach einem der Ansprüche 1 bis 8, gekennzeichnet durch Mittel zum Erfassen und Speichern einer Zeitdauer, die das Leuchtmittel (12, 52) sich in einem vorhergehenden, abweichenden Schaltzustand befunden hat, und zum Beeinflussen der Bezugsschwelleneinrichtung dergestalt, daß die Höhe der erzeugten Schwelle auch von der Zeitdauer abhängig ist.

10. Dämmerungsschalter nach einem der Ansprüche 3 bis 9, gekennzeichnet durch eine Leistungssteuervorrichtung (70, 72, 74) zum Ansteuern des Leuchtmittels (12; 52) in diskreten, vorbestimmten Leistungsstufen, die so ausgebildet ist, daß eine Aktivierung des Leuchtmittels in einer nächst höheren Leistungsstufe bei Unterschreiten der ersten, unteren Schwelle erfolgt, und ein Deaktivieren des Leuchtmittels in eine nächst tiefere Leistungsstufe bei einem Uberschreiten der zweiten, oberen Schwelle erfolgt.

11. Dämmerungsschalter nach einem der Ansprüche 1 bis 10, gekennzeichnet durch eine in den Strahlengang zwischen das Umgebungslicht und das Lichterfassungselement geschaltete, optische Filtereinrichtung (24, 30), die in der Art eines Bandfilters von dem Leuchtmittel emittierte Spektralkomponenten ausfiltert.

## Claims

1. Photo-electric switch for a lighting means (12; 52) comprising a light-sensing element (22) reacting to ambient light and a switching unit (38; 54) designed to activate or deactivate the lighting means (12; 52) in response to an output signal from the light-sensing element (22), the switching unit having a reference threshold device (48; 68), the lighting means (12; 52) being activated or deactivated as a function of whether the output signal from the light-sensing element (22) exceeds or falls below a threshold generated by the reference threshold device (48; 68), and the respective level of the threshold generated being dependent on the quantity of light sensed by the light-sensing element (22), characterised by a delay device (S32, S52; 42, 44; 76) designed in such a manner that, for a predetermined time interval in response to activation of the lighting means by the switching unit. it prevents the latter from reacting to the output signal from the light-sensing element (22).

2. Photo-electric switch according to claim 1, characterised in that the reference threshold device (48; 68) has means which, when the lighting means is activated, reduce the threshold by an amount corresponding essentially to the amount of light from the lighting means (12; 52) incident on the light-sensing element (22).

3. Photo-electric switch according to claim 1 or claim 2, characterised in that the reference threshold device has a measuring device (54; 66) designed to measure light incident on the light-sensing element (22) when the lighting means is activated and deactivated, and has a hysteresis device (S41-S43; 68) which is designed to generate a first, lower threshold and a second, upper threshold and generates both the first, lower threshold and the second, upper threshold in response to a measuring signal from the measuring device (54; 66).

4. Photo-electric switch according to claim 3, characterised in that the measuring device (54; 66) is designed in such a manner that, when the incident light is sensed when the lighting means is activated and deactivated, it forms and stores respective mean values sensed over a predetermined period of time.

5. Photo-electric switch according to claim 3 or claim 4, characterised in that the hysteresis device (S41-S43; 68) is designed in such a manner that the distance between the first, lower threshold and the second, upper threshold is variable and dependent on the quantity of light measured by the measuring device (54; 66).

6. Photo-electric switch according to one of claims 3 to 5, characterised in that the hysteresis device (S41-S43; 68) has a storage device for reading out respective threshold values for the first and second thresholds from a plurality of predetermined stored threshold values.

7. Photo-electric switch according to one of claims 1 to 6, characterised in that the reference threshold device has an adjusting device (56; 60, 64) for additional manual adjustment of the threshold.

8. Photo-electric switch according to claim 7, characterised in that the light-sensing element is in the form of an LDR and the adjusting device has an aperture plate (60, 64) designed to compensate for an essentially logarithmic response characteristic of the LDR.

9. Photo-electric switch according to one of claims 1 to 8, characterised by means for sensing and storing a period of time during which the lighting means (12, 52) was in a previous, differing switching state and for influencing the reference threshold device in such a manner that the level of the threshold generated is also dependent on the period of time.

10. Photo-electric switch according to one of claims 3 to 9, characterised by a power control device (70, 72, 74) for controlling the lighting means (12; 52) in discrete. predetermined power stages, designed in such a manner that the lighting means is activated in a successive higher power stage when the value falls below the first, lower threshold and the lighting means is deactivated to a successive lower power stage when the second, upper threshold is exceeded.

11. Photo-electric switch according to one of claims 1 to 10, characterised by an optical filter device (24, 30) which is inserted into the beam path between the ambient light and the light-sensing element and filters out spectral components emitted by the lighting means in the manner of a band filter.

## Revendications

1. Interrupteur crépusculaire pour un luminaire (12; 52), avec un élément de détection de lumière (22) réagissant à la lumière ambiante et une unité de commutation (38; 54) conçue pour réagir à un signal de sortie de l'élément de détection de lumière (22) pour activer ou désactiver le luminaire (12, 52)
dans lequel
l'unité de commutation comporte un dispositif à seuil de référence (48, 68), qui effectue l'activation ou la désactivation du luminaire (12 ; 52) selon que le signal de sortie de l'élément de détection de lumière (22) est supérieur ou inférieur à un seuil généré par le dispositif à seuil de référence (48 ; 68), et et la hauteur respective du seuil généré dépendant de la quantité de lumière appréhendée par l'élément de détection de lumière (22)
caractérisé par un dispositif de retardement (S32, S52; 42, 44 ; 76), réalisé de manière à ce que, pour un intervalle de temps prédéterminé, en réaction à une activation du luminaire par l'unité de commutation, toute réaction de celle-ci au signal de sortie de l'élément de détection de lumière (22) soit empêchée.

2. Interrupteur crépusculaire selon la revendication 1, caractérisé en ce que le dispositif à seuil de référence (48 ; 68) présente des moyens qui, lorsque le luminaire est activé, abaissent le seuil d'une valeur correspondant sensiblement à la valeur de la lumière, arrivant sur l'élément de détection de lumière (22), du luminaire (12 ; 52).

3. Interrupteur crépusculaire selon la revendication 1 ou 2, caractérisé en ce que le dispositif à seuil de référence présente un dispositif de mesure (54 ; 66) qui est réalisé pour mesurer la lumière incidente sur l'élément de détection de lumière (22), lorsque le luminaire est activé et lorsqu'il est désactivé, et un dispositif à hystérésis (S41 - S43 ; 68), qui est équipé pour générer un premier seuil inférieur et un deuxième seuil supérieur et qui génère tant le premier seuil inférieur qu'également le deuxième seuil supérieur, en réaction à un signal de mesure venant du dispositif de mesure (54 ; 66).

4. Interrupteur crépusculaire selon la revendication 3, caractérisé en ce que le dispositif de mesure (54 ; 66) est réalisé de manière que, lors de la détection de la lumière incidente, lorsque le luminaire est activé et lorsqu'il est désactivé, il forme et mémorise des valeurs moyennes respectives, appréhendées sur un intervalle de temps prédéterminé.

5. Interrupteur crépusculaire selon la revendication 3 ou 4, caractérisé en ce que le dispositif à hystérésis (S41 - S43 ; 68) est réalisé de manière que l'espacement entre le premier seuil inférieur et le deuxième seuil supérieur soit variable et dépende de la quantité de lumière mesurée par le dispositif de mesure (54 ; 66).

6. Interrupteur crépusculaire selon l'une des revendications 3 à 5, caractérisé en ce que le dispositif à hystérésis (S41 - S43 ; 68) présente un dispositif de mémorisation pour lire des valeurs de seuil parmi une pluralité de valeurs de seuil prédéterminées, mémorisées, concernant le premier et le deuxième seuil.

7. Interrupteur crépusculaire selon l'une des revendications 1 à 6, caractérisé en ce que le dispositif à seuil de référence présente un dispositif de réglage (56 ; 60, 64) pour effectuer une modification manuelle supplémentaire du seuil.

8. Interrupteur crépusculaire selon la revendication 7, caractérisé en ce que l'élément de détection de lumière est réalisé sous la forme d'une résistance à caractéristique photosensible (LDR - light dependent resistor) et le dispositif de réglage présentant un sténopé (60, 64), réalisé pour compenser l'allure sensiblement logarithmique de la sensibilité de la LDR.

9. Interrupteur crépusculaire selon l'une des revendications 1 à 8, caractérisé par des moyens pour détecter et mémoriser une durée, pendant laquelle le luminaire (12, 52) s'est trouvé dans un état de commutation différent, précédent, et pour influer sur le dispositif à seuil de référence, de manière que la hauteur du seuil généré dépende également de la durée.

10. Interrupteur crépusculaire selon l'une des revendications 3 à 9, caractérisé par un dispositif de commande de puissance (70, 72, 74) pour commander le luminaire (12 ; 52) en des niveaux de puissance discrets prédéterminés, réalisé de manière qu'une activation du luminaire à un niveau de puissance immédiatement supérieur s'effectue lorsque l'on descend au-dessous du premier seuil inférieur, et qu'une désactivation du luminaire à un niveau de puissance immédiatement inférieur s'effectue lorsque l'on dépasse le deuxième seuil supérieur.

11. Interrupteur crépusculaire selon l'une des revendications 1 à 10, caractérisé par un dispositif de filtrage optique (24, 30), mis en circuit dans le trajet de rayonnement entre la lumière ambiante et l'élément de détection de lumière, éliminant par filtrage, à la façon d'un filtre passe-bande, des composantes spectrales émises par le luminaire.
